# EUROPÄISCHE PATENTSCHRIFT

(11) **EP 2 238 030 B1**
(45) Veröffentlichungstag und Bekanntmachung des Hinweises auf die Patenterteilung: **08.06.2011**
(21) Anmeldenummer: 09705585.9
(22) Anmeldetag: 15.01.2009
(51) Int. Cl.: B64D 11/06

(54) **VARIABLE SITZABSTANDSEINSTELLUNG IN EINEM FLUGZEUG**
VARIABLE SEAT SEPARATION ADJUSTMENT IN AN AIRPLANE
AJUSTEMENT VARIABLE D'ÉCART ENTRE SIÈGES DANS UN AVION

(30) Priorität: 31.01.2008 DE 102008006947; 31.01.2008 US 63048
(43) Veröffentlichungstag der Anmeldung: 13.10.2010
(73) Patentinhaber: Airbus Operations GmbH, 21129 Hamburg (DE)
(72) Erfinder: GONNSEN, Johannes, 22767 Hamburg (DE); GÄRTNER, Jens, 20359 Hamburg (DE)
(74) Vertreter: Maiwald Patentanwalts GmbH
(86) Internationale Anmeldenummer: PCT/EP2009/050404
(87) Internationale Veröffentlichungsnummer: WO 2009/095306

(56) Entgegenhaltungen:
- EP-A- 0 215 495
- EP-A- 1 849 647
- WO-A-03/074357
- JP-A- 2 279 433

## Beschreibung

### Gebiet der Erfindung

Die Erfindung betrifft die Sitzplatzkonfiguration in Flugzeugen. Insbesondere betrifft die Erfindung ein System zur gleichzeitigen longitudinalen Verschiebung mehrerer ausgewählter Sitze oder Sitzreihen in einem Flugzeug, eine Sitzgruppe in einem Flugzeug, die Verwendung eines derartigen Systems in einem Flugzeug, ein Flugzeug, sowie ein Verfahren zum Verschieben von Sitzen oder Sitzreihen in einem Flugzeug.

### Technologischer Hintergrund

Ein Flugzeug hat eine bestimmte Sitzplatzkonfiguration (Sitz-Layout), welche als fix zu betrachten ist und in 1, 2 oder 3 Klassen unterteilt ist.

Eine Rekonfiguration entspricht dem Umbau dieses Layouts, um z. B. mehr Sitze einer bestimmten Klasse zur Verfügung zu haben oder mehr nutzbaren Kabinenraum zu schaffen. Die Klassen können sich durch unterschiedliche Arten von Sitzen oder auch nur durch den Sitzabstand unterscheiden.

Ist ein Flug nur teilweise ausgebucht, so kann den Passagieren trotzdem kein höherer Komfort in Form von mehr Platz geboten werden. Eine kurzfristige Anpassung der prozentualen Verteilung der Klassen je nach Passagieraufkommen ist ebenso nicht möglich. Ebenfalls ist eine kurzfristige Anpassung von mehr Sitzkomfort entsprechend der Zahlungsbereitschaft von Passagieren heute nicht möglich.

WO 03/074357 A1 beschreibt ein Verfahren zur bedarfsgerechten Anpassung der Sitzreihenanordnung in Passagierflugzeugen. Es ist eine Steuerungseinrichtung vorgesehen, in der eine aktuell gewünschte Sitzreihenanordnung gespeichert wird. Jede Sitzreihe, deren Position zur Erzielung der aktuell gewünschten Sitzreihenanordnung zu verändern ist, wird, gesteuert durch die Steuerungseinrichtung, automatisch auf ihren Befestigungsschienen auf die durch die aktuell gewünschte Sitzreihenanordnung vorgegebene Position verfahren.

EP 0 215 495 A2 beschreibt ein bewegliches Sitzsystem für ein Luftfahrzeug. Die Sitze sind an Sitzschienen befestigt und jeder Sitz weist ein Paar Traktionsräder auf, die in die Sitzschienen eingreifen. Die Traktionsräder können elektrisch angetrieben werden.

Die englischsprachige Zusammenfassung der JP 2279433 A zeigt eine Sitzschiene mit einer Sitzverschiebeeinrichtung, welche einen Elektromotor aufweist, der in die Sitzschiene eingreift.

### Zusammenfassung der Erfindung

Es ist eine Aufgabe der Erfindung, eine verbesserte anpassbare Sitzplatzkonfigurierung in einem Flugzeug bereitzustellen.

Es sind ein System zur gleichzeitigen longitudinalen Verschiebung mehrerer ausgewählter Sitze oder Sitzreihen in einem Flugzeug, eine Sitzgruppe, eine Verwendung, ein Flugzeug und ein Verfahren gemäß den Merkmalen der unabhängigen Ansprüche angegeben. Weiterbildungen der Erfindung ergeben sich aus den Unteransprüchen.

Die beschriebenen Ausführungsbeispiele betreffen gleichermaßen das System, die Sitzgruppe, die Verwendung, das Flugzeug und das Verfahren.

Gemäß einem Ausführungsbeispiel der Erfindung ist ein System zur longitudinalen Verschiebung mehrerer ausgewählter Sitze oder Sitzreihen in einem Flugzeug angegeben, welches eine Antriebseinrichtung zum Verschieben der Sitze aufweist, wobei das System zur gleichzeitigen Verschiebung der Sitze gemäß einer Änderung in einer Sitzplatzkonfigurationsplanung ausgeführt ist.

In anderen Worten können, beispielsweise bordextern, Änderungen in der Sitzplatzkonfigurationsplanung vorgenommen werden. Diese Änderungen werden beispielsweise von einem Fluggast via Buchung eingegeben oder initiiert. Diese Sitzplatzkonfigurationsplanung wird dann dem System mitgeteilt, so dass die Sitze entsprechend, beispielsweise vollautomatisch oder vollmanuell, verschoben werden können. Das System ermöglicht somit das schnelle, gleichzeitige Verschieben der Sitze, ggf. mit unterschiedlichem Abstand (Seat Pitch) zueinander, je nach Bedarf. Mit diesem System können also die Abstände der einzelnen Sitze oder Sitzreihen zueinander gleichzeitig, individuell vergrößert oder verkleinert werden.

Je nach Anwendungsfall erfolgen die Konfiguration und Positionierung der einzelnen Sitze oder Sitzreihen vollautomatisch (also mit entsprechenden elektrischen Antrieben und elektronischen Steuerungen und Regelungen) oder beispielsweise rein mechanisch mit einfachsten Mitteln. Auch können Mischungen dieser beiden Ausführungsformen vorgesehen sein. So kann beispielsweise die Konfiguration (also die Planung, wo die einzelnen Sitze oder Sitzreihen stehen sollen) elektronisch durchgeführt werden, wobei dann die Verschiebung der Sitze oder Sitzreihen mechanisch, handgetrieben erfolgt. Ebenso kann die Konfiguration von Hand erfolgen, beispielsweise indem eine Steuerkette entsprechend "codiert" (also auf die zu erreichenden Sitzabstände eingestellt) wird. Das Verschieben der Sitze erfolgt dann wiederum elektrisch, also automatisch.

Gemäß einem weiteren Ausführungsbeispiel der Erfindung ist das System als mechanisch gekoppeltes System ausgeführt. Beispielsweise sind alle in Frage kommenden Sitze bzw. Sitzreihen mechanisch an die Antriebseinrichtung gekoppelt, welche darauf alle Sitze gleichzeitig verschiebt.

Gemäß einem weiteren Ausführungsbeispiel der Erfindung ist das System zur Verschiebung der Sitze oder der Sitzreihen durch die Anwendung einer Zugkraft auf die einzelnen Sitze oder Sitzreihen ausgeführt. Bei der Antriebseinrichtung handelt es sich um eine Transportvorrichtung, beispielsweise eine Transportkette, ein Transportband, ein Transportseil, ein Gliederseil oder einen Zahnriemen, jeweils mit einer entsprechenden Antriebsmechanik oder einem Motor zum Bewegen der Transportvorrichtung. Auch kann die Transportvorrichtung zusammenfaltbar in der Art eines Meterstabs oder Zollstocks ausgeführt sein. Durch das Bewegen der Transportvorrichtung sind dann die Sitze oder Sitzreihen in vorab definierte (also definierbare) Abstände bringbar.

Hierbei handelt es sich um eine mechanische Lösung mit einfachsten Mitteln. Beispielsweise sind Haken, Bolzen oder Vorsprünge an den Sitzen angebracht. Die Antriebseinrichtung weist eine entsprechende Codierung auf, bei der es sich beispielsweise um Mitnehmer in Form von Ösen oder Haken handelt, die in die entsprechenden Gegenstücke an den Sitzen eingreifen können, wenn die Antriebseinrichtung daran vorbeigezogen wird. Bei der Antriebseinrichtung kann es sich auch um eine Mischung aus Seilabschnitten und Kettengliedern handeln, je nach Anwendungsfall. Durch die entsprechende Einstellung des Abstandes der Mitnehmer zueinander werden dann die späteren Sitzabstände bestimmt.

Gemäß einem weiteren Ausführungsbeispiel der Erfindung ist das System zur Verschiebung der Sitze oder Sitzreihen durch die Anwendung einer Schubkraft auf die einzelnen Sitze oder Sitzreihen ausgeführt. In diesem Fall handelt es sich um eine weitgehend starre Transportvorrichtung, welche von dem Motor oder der entsprechenden Antriebsmechanik vorwärts geschoben wird und dann die Sitze mitnimmt und verschiebt.

Die Transportvorrichtung ist beispielsweise in Art eines Meterstabes oder Zollstocks ausgeführt und kann zusammengefaltet werden. Die Längen der einzelnen, zueinander axial gelagerten Schenkel der Transportvorrichtung sind gemäß den einzustellenden Sitzabständen veränderbar. Zur Längenänderung werden beispielsweise einzelne Teilsegmente in den entsprechenden Schenkel eingesetzt oder herausgenommen. (auch in der Mitte einer 3er Sitzbank).

Gemäß einem weiteren Ausführungsbeispiel der Erfindung ist das System zur autarken, einzelnen Verschiebung der ausgewählten Sitze oder Sitzreihen ausgeführt. Somit können individuell ausgewählte Sitze einzeln verschoben werden, beispielsweise je nach persönlichem Wunsch der einzelnen Passagiere bei der Buchung.

Gemäß einem weiteren Ausführungsbeispiel der Erfindung weist das System eine elektronische Steuerung zur Steuerung der Antriebseinrichtung auf.

Diese Steuerung kann beispielsweise durch das Flugpersonal bedient werden. Auch kann die Steuerung mit bordexternen Steuerdaten versorgt werden.

Gemäß einem weiteren Ausführungsbeispiel der Erfindung weist das System eine oder mehrere separate Sitzschienen zum Führen der Sitze und eine Verriegelungseinrichtung pro Sitzfüßbefestigung oder Sitzfuß oder Sitz oder pro Sitzreihe zum Fixieren des entsprechenden Sitzes bzw. der Sitzreihe an der Sitzschiene auf.

Sitz und/oder Sitzschiene können hierfür beispielsweise eine gleitfähige Beschichtung (beispielsweise eine Polytetrafluoroethylen (PTFE) Beschichtung) aufweisen oder sonstige Oberflächen mit geringem mechanischen Widerstand. Zur Fixierung und Sicherung der Sitze oder Sitzreihen ist ein Schnellverschlussmechanismus (Quick-Lock) vorgesehen, der ggf. elektronisch oder auch rein mechanisch gesteuert bzw. bedient wird.

Gemäß einem weiteren Ausführungsbeispiel der Erfindung weist die Verriegelungseinrichtung einen Stab und ein Riegelelement oder Schlüssel auf, wobei der Stab zur Betätigung des Riegelelements vorgesehen ist und nach der Betätigung vom Riegelelement lösbar ist. Das Riegelelement dient der Fixierung des Sitzes an der Sitzschiene oder einer anderen unbeweglichen Struktur in der Kabine.

Wird der Stab beispielsweise, nachdem er in das Riegelelement eingeschoben ist, in die eine Richtung gedreht, wird der Sitz fixiert. Dreht man den Stab in die andere Richtung, wird das Riegelelement geöffnet und der Sitz freigegeben, um verschoben zu werden.

Gemäß einem weiteren Ausführungsbeispiel der Erfindung weist das System eine Eingabeeinheit zur Änderung der Sitzkonfigurationsplanung durch einen Fluggast auf, wobei die Eingabeeinheit außerhalb des Flugzeugs anordenbar ist und in diesem Fall drahtlos kommunizierfähig mit der Steuerung gekoppelt ist.

Beispielsweise kann der Fluggast bei seiner Flugbuchung eingeben, wie viel Beinfreiheit er zur Verfügung gestellt haben möchte. Vor dem Einstieg der Passagiere wird dann die Sitzplatzeinstellung entsprechend vorgenommen.

Gemäß einem weiteren Ausführungsbeispiel der Erfindung ist eine Sitzgruppe in einem Flugzeug angegeben, welche eine Vielzahl von Flugzeugsitzen sowie ein oben beschriebenes System zur gleichzeitigen longitudinalen Verschiebung der Sitze oder Sitzreihen aufweist.

Gemäß einem weiteren Ausführungsbeispiel der Erfindung ist die Verwendung eines oben beschriebenen Systems in einem Flugzeug angegeben.

Gemäß einem weiteren Ausführungsbeispiel der Erfindung ist ein Flugzeug mit einem oben beschriebenen System angegeben.

Gemäß einem weiteren Ausführungsbeispiel der Erfindung ist ein Verfahren zum gleichzeitigen longitudinalen Verschieben mehrerer ausgewählter Sitze oder Sitzreihen in einem Flugzeug angegeben, bei dem eine Sitzplatzkonfiguration geplant wird und daraufhin die Sitze bzw. Sitzreihen gemäß einer Änderung in der Sitzplatzkonfigurationsplanung automatisch verschoben werden.

Die Verschiebung kann auch manuell erfolgen. In jedem Fall werden die Sitze gleichzeitig verschoben.

Gemäß einem weiteren Ausführungsbeispiel der Erfindung wird die geplante Sitzplatzkonfiguration von einer Eingabeeinheit an eine Steuereinheit übermittelt. Daraufhin erfolgt ein automatisches Lösen der Fixierungen der einzelnen Sitze oder Sitzreihen vor der Verschiebung. Nach der Verschiebung werden die Sitze oder Sitzreihen dann wieder automatisch fixiert.

Gemäß einem weiteren Ausführungsbeispiel der Erfindung ist diese Eingabeeinheit außerhalb des Flugzeugs angeordnet, so dass die Passagiere oder das Bodenpersonal die Sitzplatzplanung bordextern vornehmen können, beispielsweise bevor das Flugzeug sich am Gate eingefunden hat. Auf diese Weise kann Zeit gespart werden.

Im Folgenden werden mit Verweis auf die Figuren bevorzugte Ausführungsbeispiele der Erfindung beschrieben.

### Kurze Darstellung der Figuren

Fig. 1 zeigt eine schematische Darstellung des Informationsflusses für eine Sitzplatzkonfiguration gemäß einem Ausführungsbeispiel der Erfindung.
Fig. 2 zeigt eine schematische Darstellung von Verfahrensschritten gemäß einem Ausführungsbeispiel der Erfindung.
Fig. 3 zeigt ein Flussdiagramm eines Verfahrens gemäß einem Ausführungsbeispiel der Erfindung.
Fig. 4 zeigt ein Flussdiagramm gemäß einem weiteren Ausführungsbeispiel der Erfindung.
Fig. 5 zeigt eine schematische Darstellung eines Sitzes mit Riegelelement gemäß einem Ausführungsbeispiel der Erfindung.
Fig. 6 zeigt eine Seitenansicht einer Passagierkabine gemäß einem Ausführungsbeispiel der Erfindung.
Fig. 7A zeigt eine Seitenansicht auf ein System gemäß einem Ausführungsbeispiel der Erfindung.
Fig. 7B zeigt eine Seitenansicht auf das System der Fig. 7A in einem anderen Zustand.
Fig. 8A zeigt eine schematische Darstellung eines Lösevorgangs eines ersten Sitzes gemäß einem Ausführungsbeispiel der Erfindung.
Fig. 8B zeigt eine schematische Darstellung eines Lösevorgangs eines zweiten Sitzes gemäß einem Ausführungsbeispiel der Erfindung.
Fig. 9 zeigt eine Transportvorrichtung gemäß einem Ausführungsbeispiel der Erfindung.
Fig. 10A und 10B zeigen zwei Schenkel der Transportvorrichtung der Fig. 9.
Fig. 11 zeigt die Transportvorrichtung der Fig. 9 in teilweise ausgeklapptem Zustand.
Fig. 12A und 12B zeigen die Transportvorrichtung der Fig. 9 im Einsatz in der Flugzeugkabine.
Fig. 13 zeigt eine weitere schematische Darstellung einer Transportvorrichtung gemäß einem Ausführungsbeispiel der Erfindung.

### Detaillierte Darstellung von Ausführungsbeispielen

Die Darstellungen in den Figuren sind schematisch und nicht maßstäblich.

In der folgenden Figurenbeschreibung werden für die gleichen oder ähnlichen Elemente die gleichen Bezugsziffern verwendet.

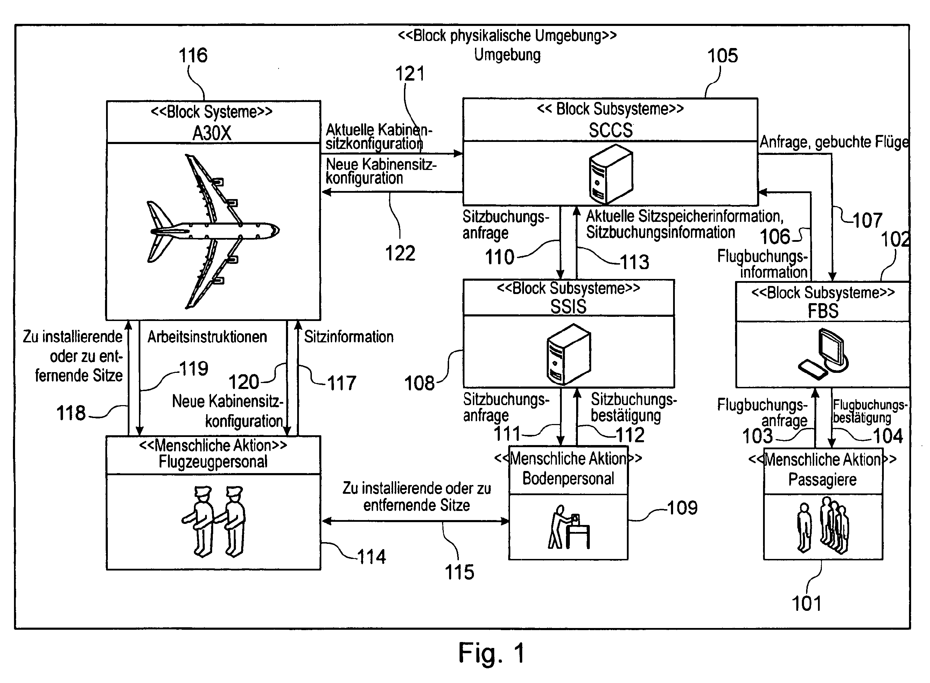

Fig. 1 zeigt eine schematische Darstellung eines Informationsflusses für eine Sitzkonfigurationsplanung und eine darauf folgende Sitzkonfiguration. Die Passagiere 101 stellen eine Anfrage an das Flugbuchungssystem FBS 102 bezüglich einer Flugbuchung. Daraufhin erfolgt ggf. eine Flugbuchungsbestätigung (siehe Pfeile 103, 104).

Die Flugbuchungsinformation wird daraufhin vom Flugbuchungssystem an ein Subsystem SCCS 105 weitergegeben. Das SCCS 105 hat vorher beispielsweise eine entsprechende Anfrage an das FBS 102 übermittelt (siehe Pfeile 106, 107).

Weiterhin ist ein sog. SSIS 108 vorgesehen, welches mit dem SCCS 105 und dem Bodenpersonal 109 in Kommunikation steht. Beispielsweise wird eine Anfrage bezüglich einer Sitzbuchung vom SCCS 105 an das SSIS 108 weitergegeben (siehe Pfeil 110). Diese Anfrage wird dann vom SSIS 108 zum Bodenpersonal 109 weitergegeben (siehe Pfeil 111).

Entsprechend erfolgt eine Sitzbuchungsbestätigung vom Bodenpersonal 109 zum SSIS 108 (siehe Pfeil 112). Diese Bestätigung wird dann vom SSIS 108 an das SCCS 105 weitergegeben, ggf. zusammen mit Sitzspeicherinformation ("Current_Seat_Storage_Information", Pfeil 113).

Das Flugpersonal 114 steht ebenfalls in Kommunikation mit dem Bodenpersonal 109. Über den Kommunikationspfad 115 werden Daten bezüglich der zu installierenden oder zu entfernenden Sitze ausgetauscht.

Weiterhin steht das Flugpersonal 114 in Kommunikation mit dem Flugzeug 116. So werden Sitzinformationen 117 an ein entsprechendes Flugzeugsystem übermittelt. Weiterhin erfolgt zwischen dem Flugzeug und dem Flugzeugpersonal ein Informationsaustausch bezüglich der zu installierenden oder zu entfernenden Sitze 118. Zusätzlich werden vom Flugzeug Arbeitsinstruktionen 119 an das Flugzeugpersonal übermittelt, wie auch neue Kabinensitzkonfigurationen 120.

Zwischen dem Flugzeug 116 und dem SCCS 105 werden ebenfalls Daten übermittelt. Zum einen gibt das Flugzeug die derzeitige Kabinensitzkonfiguration 121 an das SCCS 105 weiter. Andererseits wird die neue

Kabinensitzplatzkonfiguration 122 vom SCCS 105 an das Flugzeug 116 übermittelt.

Sämtliche Kommunikationsverbindungen können drahtlos ausgeführt sein.

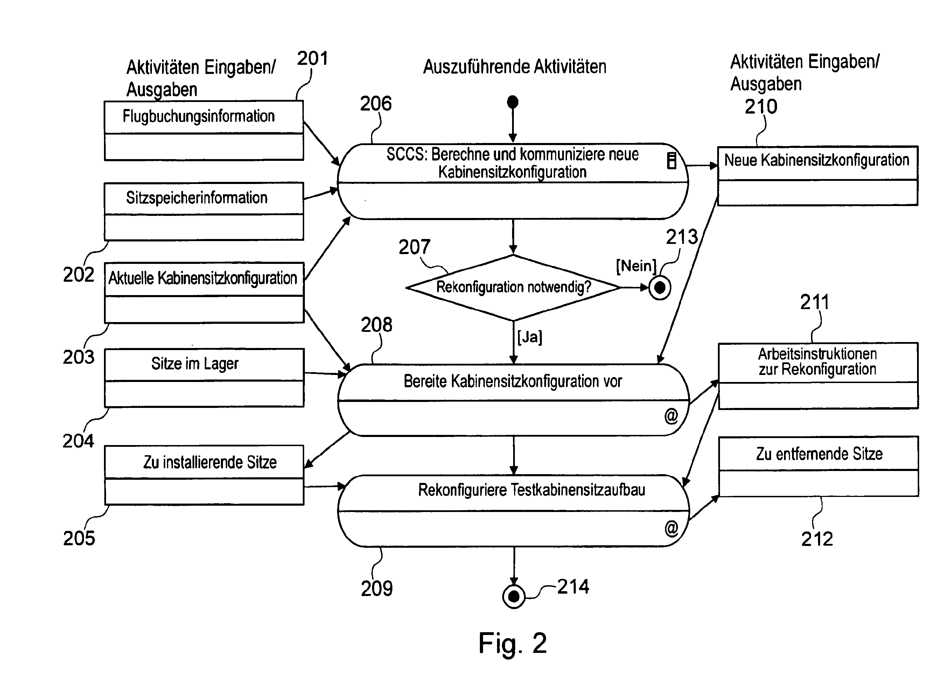

Fig. 2 zeigt ein Flussdiagramm eines Verfahrens gemäß einem Ausführungsbeispiel der Erfindung. In den Schritten 201, 202, 203 werden Flugbuchungsinformation, Sitzspeicherinformation und Informationen bezüglich der derzeitigen Kabinensitzkonfiguration an das SCCS 206 bereitgestellt.

Das SCCS 206 berechnet und kommuniziert eine neue Kabinensitzkonfiguration 210 auf Basis dieser bereitgestellten Informationen. Daraufhin wird die Frage gestellt, ob eine Rekonfiguration erforderlich ist. Falls keine Rekonfiguration erforderlich sein sollte, müssen keine weiteren Aktivitäten durchgeführt werden (siehe Schritt 213). Ist eine Rekonfiguration erforderlich, wird die Kabinensitzrekonfigurierung vorbereitet (Schritt 208). Hierfür wird die Information bezüglich der neuen Kabinensitzkonfiguration 210 zurate gezogen. Weiterhin werden die Informationen bezüglich der augenblicklichen Kabinensitzplatzkonfiguration 203 und der Sitze im Lager 204 zurate gezogen.

Daraufhin erfolgt ein Test der rekonfigurierten Sitzplatzzusammenstellung (Layout) 209. Hierfür können auch Arbeitsinstruktionen zur Rekonfiguration 211 mit einbezogen werden. Eine mögliche Ausgabe 212 bezeichnet die Sitze, die entfernt werden müssen.

Das Verfahren endet in Schritt 214.

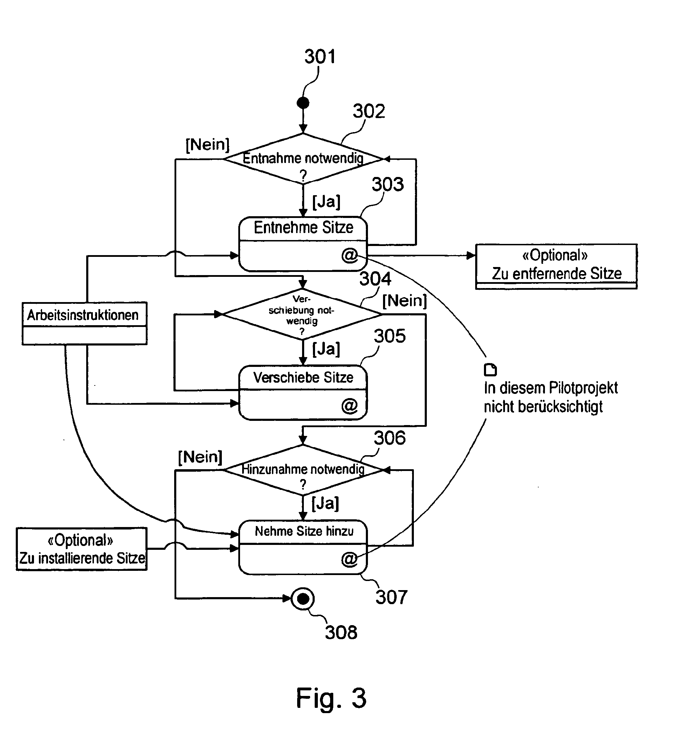

Fig. 3 zeigt ein Flussdiagramm eines weiteren Verfahrens gemäß einem Ausführungsbeispiel der Erfindung. Es handelt sich hier um die Rekonfiguration und den Test des Sitzlayouts.

Die Startbedingung 301 besteht darin, dass das Flugzeug gelandet ist und die Passagiere das Flugzeug verlassen haben. In Schritt 302 wird entschieden, ob eine Entnahme von Sitzen notwendig ist. Ist eine Entnahme notwendig, werden die entsprechenden Sitze entnommen (Schritt 303). Daraufhin startet das Verfahren wieder mit Schritt 302. Alternativ muss der beanspruchte Raum für Sitze in der Kabine geschaffen werden (z.B. durch faltbare Bordküchen oder nicht benutze Sebstbedienungsbars (Self Service Bars) oder faltbare Sitze)

Ist keine Entnahme notwendig, wird entschieden, ob eine Sitzverschiebung 304 notwendig ist. Falls eine Verschiebung notwendig ist, werden die Sitze verschoben (Schritt 305). Falls keine Verschiebung notwendig ist, wird entschieden, ob Sitze zusätzlich eingebaut werden sollen (Schritt 306). Falls Sitze neu einzubauen sind, werden neue Sitze hinzugenommen (Schritt 307). Ist keine Hinzunahme neuer Sitze erforderlich, endet das Verfahren in Schritt 308.

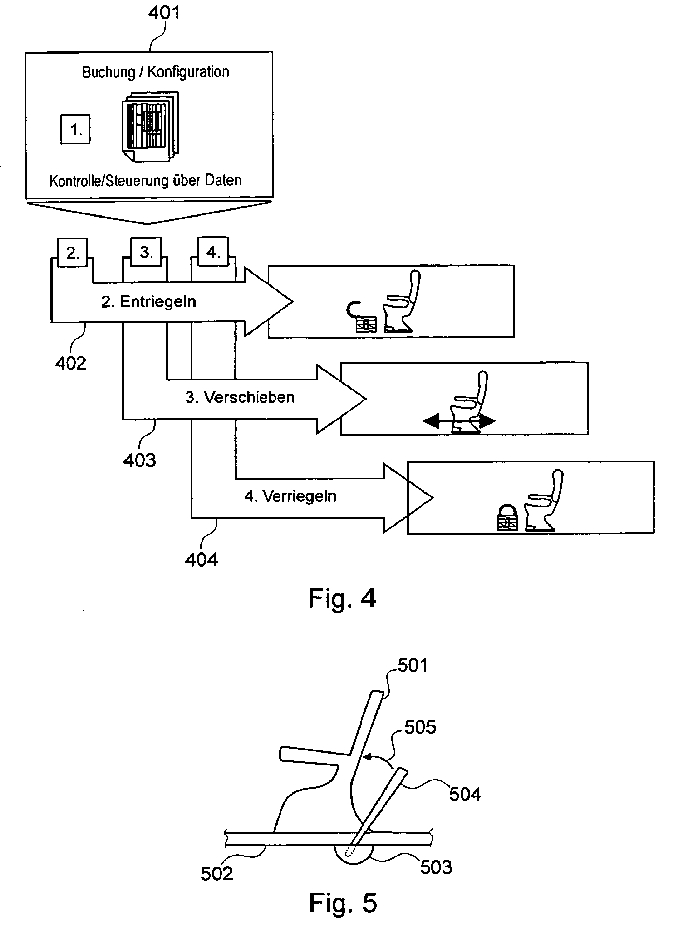

Fig. 4 zeigt einen Verfahrensablauf gemäß einem weiteren Ausführungsbeispiel der Erfindung. In Schritt 401 erfolgt die Buchung bzw. Konfiguration der Sitze. Es werden entsprechende Steuerdaten erzeugt. Diese Daten werden dann an das Flugzeug übergeben, beispielsweise über eine Funkübertragungsstrecke. In Schritt 402 erfolgt die Entriegelung der entsprechenden Sitze, die verschoben oder ausgebaut werden sollen. Die Entriegelung kann vollautomatisch erfolgen oder manuell vom Flugpersonal durchgeführt werden. In Schritt 403 werden die Sitze verschoben und in Schritt 404 erfolgt die Verriegelung oder Fixierung der Sitze.

Fig. 5 zeigt eine schematische Darstellung eines Sitzes mit einem entsprechenden Verriegelungsmechanismus. Der Sitz 501 befindet sich auf einer Sitzschiene 502 und ist mit einem Riegelelement 503 an der Schiene 502 fixiert. Ein Stab 504 kann in das Riegelelement 503 eingeschoben werden und durch Drehung des Stabes (siehe Pfeil 505) gegen den Uhrzeigersinn wird der Sitz entriegelt. Auch ist es möglich, dass das Riegelelement 503 mit einem Motor und einer elektronischen Steuerung verbunden ist, so dass eine elektronische/elektrische/automatische Ent- und Verriegelung des Sitzes stattfinden kann. Beispielsweise ist die Ent- und Verriegelung des Sitzes von einem zentralen Steuerpult aus möglich, also ferngesteuert.

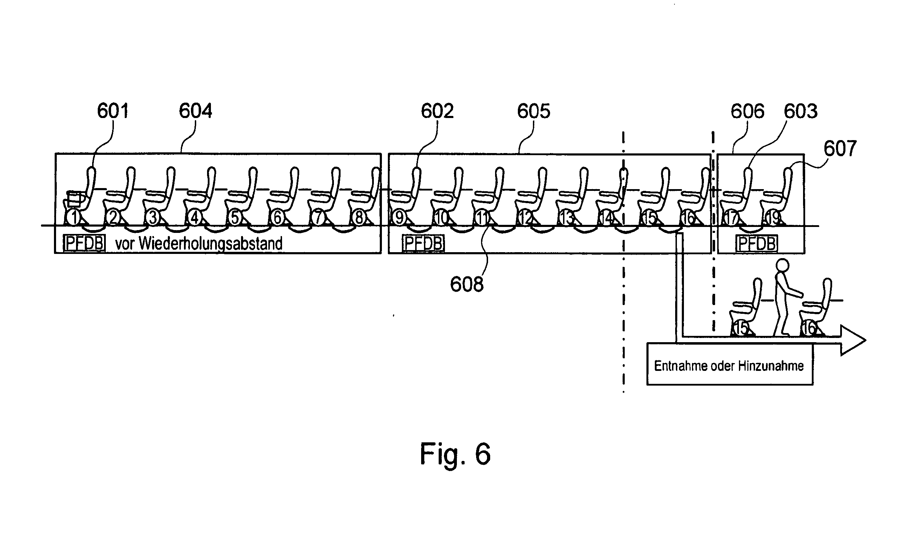

Fig. 6 zeigt eine Seitenansicht einer Passagierkabine mit 19 Sitzen und einer entsprechenden Sitzverkabelung, beispielsweise Sitze 601, 602, 603, welche in drei verschiedenen Klassen 604, 605, 606 angeordnet sind.

Die erste Sitzreihe 601 wird, falls gewünscht, nicht verschoben, beispielsweise aufgrund einer speziellen Tischanordnung. Aufgrund des fehlenden Tisches wird, falls gewünscht, auch die letzte Sitzreihe 607 nicht verschoben.

Die Sitze werden beispielsweise dort verschoben, wo die Kabine Raum für Sitze schaffen kann (z.B. aus Transportgründen). Die Sitze sind alle auf einer Sitzschiene 608 angebracht, an welcher sie fixiert werden können und auf welcher sie nach Lösen der Fixierung verschoben werden können.

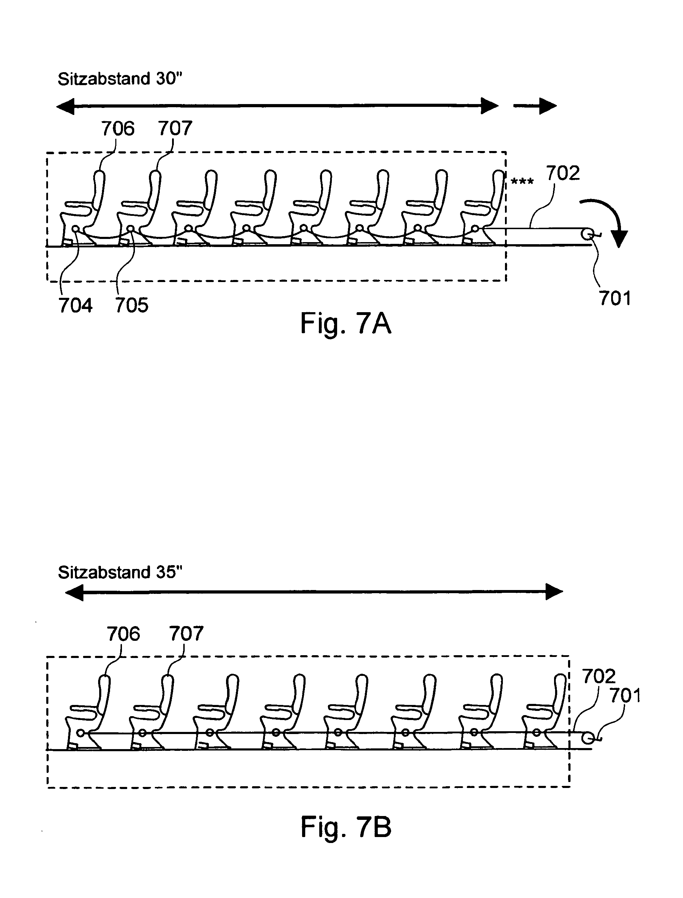

Fig. 7A zeigt eine Seitenansicht eines Systems zum Verschieben von Sitzen gemäß einem Ausführungsbeispiel der Erfindung. Die Sitze weisen einen mittleren Abstand von 30 Inch (also etwa 76 cm) auf. Durch Drehen der Rolle 701, welches per Hand oder mechanisch angetrieben über einen Motor erfolgen kann, wird die Transportvorrichtung 702 unter Zug gesetzt. Die Mitnehmer, siehe beispielsweise Mitnehmer 704, 705, führen dann zu einer Verschiebung der Sitze 706, 707, wenn der entsprechende Seilabschnitt unter Spannung steht.

Die Sitze können auf einfache und leichte Art verschoben werden. Dies wird beispielsweise durch eine PTFE Beschichtung der gleitenden Bereiche unterstützt. Soll beispielsweise der Sitzabstand von 30 Inch auf 35 Inch (etwa 90 cm) vergrößert werden, werden fünf weitere Inch (2,54 cm) pro Sitz benötigt. Insgesamt muss die Transportvorrichtung 702 also um 35 Inch "eingerollt" werden (siehe Fig. 7B).

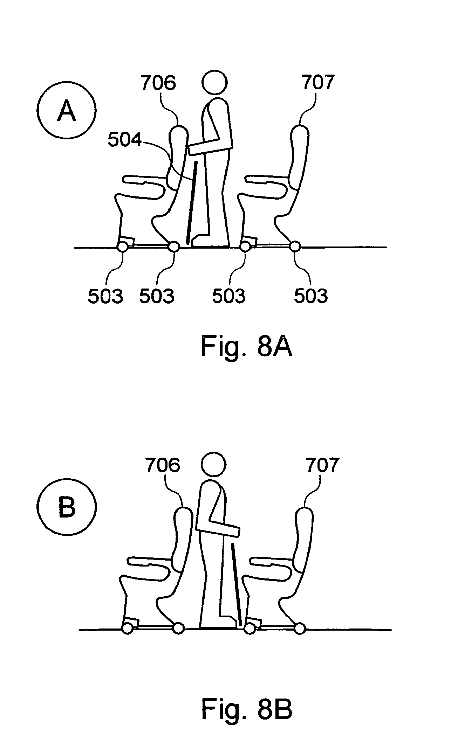

Fig. 8A und 8B zeigen einen Lösevorgang vom vorderen Sitz 706 bzw. vom hinteren Sitz 707.

Das Lösen der Sitze erfolgt beispielsweise rein mechanisch, mittels einer Riegelvorrichtung 503 und einem entsprechenden Stab 504. Das Bordpersonal geht hierbei von Sitz zu Sitz und entriegelt jeden Sitz separat.

Die Rekonfiguration der Sitze dauert maximal 30 Minuten. Es ist keine besondere Ausbildung des Personals erforderlich. Das Personal kann überwiegend aufrecht arbeiten. Aus Sicherheitsgründen ist für die Verriegelung bzw. Fixierung der Sitze ein spezielles Werkzeug (beispielsweise ein Stab 504) vorgesehen. Die Verriegelung bzw. das Lösen mehrerer Riegel 503 für einen Sitz erfolgt gleichzeitig, da die Riegel miteinander gekoppelt sind. Auf diese Weise kann Zeit eingespart werden.

Der Verriegelungsvorgang läuft dabei genauso ab wie der Entriegelungsvorgang (nur umgekehrt).

Das nach vorne oder nach hinten Schieben der einzelnen Sitze oder Sitzreihen erfolgt hierbei, ohne dass die Sitze aus der Sitzschiene herausgenommen werden müssen. Aufgrund der reibungsarmen Lagerung der Sitze können zehn oder mehr Sitze bzw. zehn oder mehr Sitzreihen von einer einzelnen Person verschoben werden. Für jede Sitzreihe ist es möglich, einen individuellen Sitzabstand zwischen 30 und 39 Inch einzustellen. Es können alle Sitze gleichzeitig verschoben werden, wobei allerdings der Sitzabstand für jeden Sitz individuell einstellbar ist. Das Transportmittel (beispielsweise Seil oder Kette) weist voreingestellte Abstände der Mitnehmer für sämtliche separate Sitze auf. Diese Abstände können beispielsweise außerhalb des Flugzeugs eingestellt werden. Die Transportvorrichtung wird dann von der Kabinenbesatzung an Bord gebracht. An jedem Sitz bzw. an bestimmten Sitzen einer Sitzreihe ist dann beispielsweise ein Haken vorgesehen, der in den entsprechenden Mitnehmer der Transportvorrichtung eingreifen kann, wenn die Transportvorrichtung gezogen oder geschoben wird.

Natürlich können nicht nur die Sitzabstände vergrößert, sondern auch verkleinert werden, beispielsweise auch durch die Anwendung einer Schubkraft.

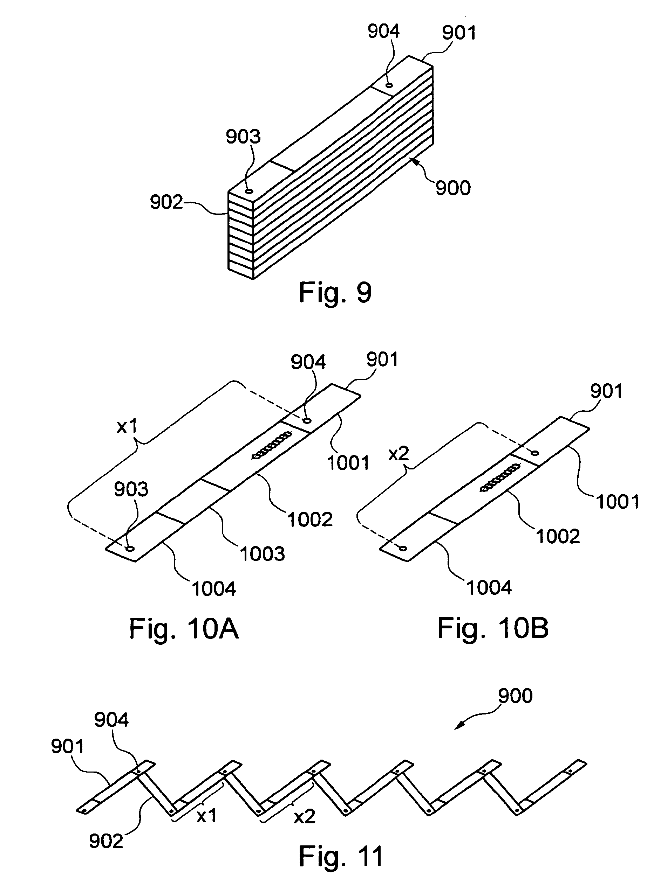

Fig. 9 zeigt eine schematische Darstellung einer Transportvorrichtung 900, die als zusammenklappbare Transportvorrichtung, vergleichbar mit einem Meterstab oder einem Zollstock, ausgeführt ist. Die Transportvorrichtung 900 weist mehrere Schenkel 901, 902, etc. auf, welche jeweils über eine axiale Lagerung 903 oder 904, etc. paarweise miteinander verbunden sind.

Die Einstellung der Transportvorrichtung kann beispielsweise außerhalb des Flugzeugs konfiguriert werden und wird dann in das Flugzeug gebracht und aufgeklappt, um die Sitze zu verschieben.

Fig. 10A und 10B zeigen jeweils einen Schenkel 901 der Transportvorrichtung 900, in zwei verschiedenen Konfigurationen.

In der ersten Konfiguration der Fig. 10A weist der Schenkel 901 vier Elemente 1001, 1002, 1003 und 1004 auf, welche miteinander verbunden sind. In der Ausführungsform der Fig. 10B weist der Schenkel 901 nurmehr drei Elemente 1001, 1002 und 1004 auf. Das Element 1003 ist herausgenommen worden, um den Schenkel zu verkürzen. Auf diese Weise kann der damit korrespondierende Sitzabstand verringert werden (nämlich um die Länge des Segments 1003).

Auch können weitere Segmente hinzugefügt werden, um die Abstände zu vergrößern, je nach Sitzplatzkonfigurationsplanung.

Fig. 11 zeigt eine schematische Darstellung einer Transportvorrichtung 900 in teilweise ausgeklapptem Zustand. Hier wird deutlich, wie die einzelnen Schenkel 901, 902, etc. über die Achsen 904, etc. paarweise miteinander verbunden sind. Ist die Transportvorrichtung 900 voll ausgeklappt, rasten beispielsweise die Schenkel ineinander ein, so dass ein Zurückklappen erschwert wird (ähnlich wie bei einem Zollstock).

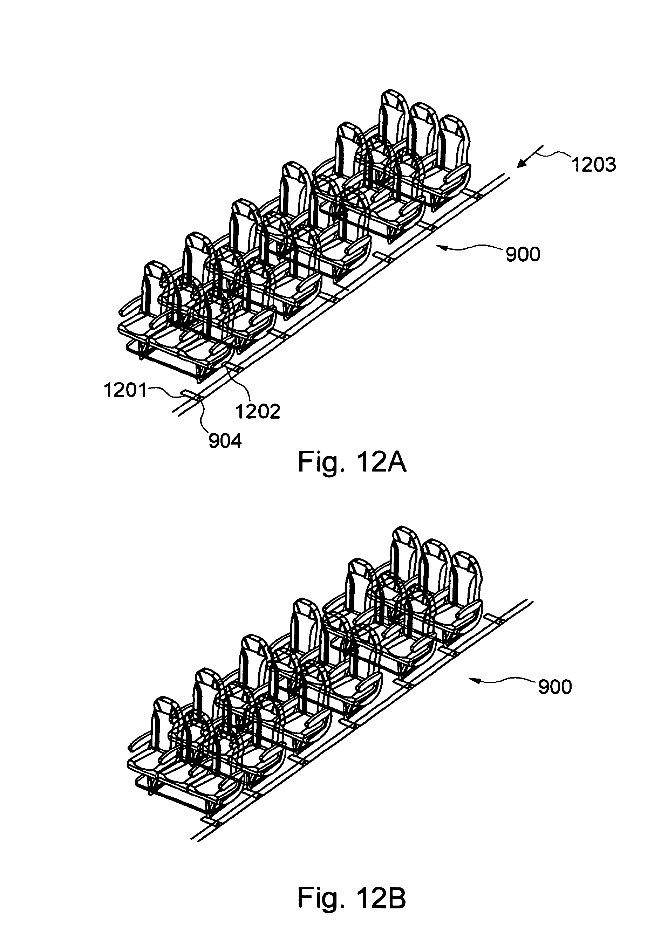

Fig. 12A und 12B zeigen die Transportvorrichtung 900 im Einsatz in der Kabine. Die Transportvorrichtung 900 ist vollständig ausgeklappt und weist, beispielsweise an den Achsen 904, etc., Mitnehmer 1201, 1202, etc. auf, welche bei Schub der Transportvorrichtung in Richtung dem Pfeil 1203 (oder entgegengesetzt zu diesem Pfeil) die entsprechende Sitzreihe mitnimmt (also vorwärts schiebt bzw. rückwärts schiebt).

Fig. 12A zeigt die Sitze vor deren Verschiebung. Fig. 12B zeigt die Sitze nach deren Verschiebung.

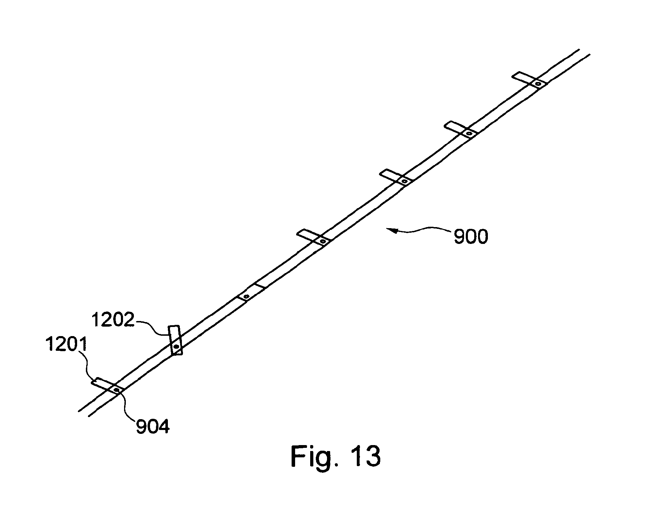

Fig. 13 zeigt eine Transportvorrichtung 900 mit einzelnen "Blockern" oder Mitnehmern 1201, 1202. Ein einzelner Blocker stoppt den entsprechenden Sitz in der richtigen Position. Beispielsweise kann die Transportvorrichtung auch einfach auf dem Kabinenboden oder der Sitzschiene fixiert werden und die Sitze werden dann manuell von Hand verschoben und stoppen am entsprechenden Blocker. Die Blocker können den gemeinsame Achse wie der entsprechende Schenkel ("Zollstock-Glied") und somit die selbe Lagerung wie die Schenkel der Transportvorrichtung aufweisen. Ergänzend sei darauf hingewiesen, dass "umfassend" und "aufweisend" keine anderen Elemente oder Schritte ausschließt und "eine" oder "ein" keine Vielzahl ausschließt. Ferner sei darauf hingewiesen, dass Merkmale oder Schritte, die mit Verweis auf eines der obigen Ausführungsbeispiele beschrieben worden sind, auch in Kombination mit anderen Merkmalen oder Schritten anderer oben beschriebener Ausführungsbeispiele verwendet werden können. Bezugszeichen in den Ansprüchen sind nicht als Einschränkungen anzusehen.

## Patentansprüche

1. System zur gleichzeitigen longitudinalen Verschiebung mehrerer ausgewählter Sitze (501, 601, 602, 603, 706, 707) oder Sitzreihen (601, 602, 603, 607) in einem Flugzeug, das System aufweisend:
eine Antriebseinrichtung zum Verschieben der Sitze (501, 601, 602, 603, 706, 707);
wobei das System zur Verschiebung der Sitze (501, 601, 602, 603, 706, 707) gemäß einer Änderung in einer Sitzplatzkonfigurationsplanung ausgeführt ist; **dadurch gekennzeichnet, dass**
die Antriebseinrichtung eine Kodierung in Form von Mitnehmern (704, 705, 1201, 1202) aufweist;
die Sitze (501, 601, 602, 603, 706, 707) oder Sitzreihen (601, 602, 603, 607) entsprechende Gegenstücke aufweisen;
die Mitnehmer (704, 705, 1201, 1202) zum Eingreifen in die entsprechenden Gegenstücke der Sitze (501, 601, 602, 603, 706, 707) oder Sitzreihen (601, 602, 603, 607) ausgeführt sind;
durch die Einstellung der Abstände der Mitnehmer (704, 705, 1201, 1202) zueinander die späteren Sitzabstände bestimmt werden.

2. System nach Anspruch 1,
wobei das System als mechanisch gekoppeltes System ausgeführt ist.

3. System nach Anspruch 1 oder 2,
wobei das System zu Verschiebung der Sitze (501, 601, 602, 603, 706, 707) oder der Sitzreihen (601, 602, 603, 607) durch die Anwendung einer Zugkraft auf die einzelnen Sitze (501, 601, 602, 603, 706, 707) oder Sitzreihen (601, 602, 603, 607) ausgeführt ist;
wobei die Antriebseinrichtung eine Transportvorrichtung (702, 900) ausgewählt aus der Gruppe bestehend aus Transportkette, Transportband, Transportseil, Gliederseil und Zahnriemen aufweist;
wobei die Antriebseinrichtung weiterhin einen Motor oder eine Mechanik zum Bewegen der Transportvorrichtung (702, 900) aufweist;
wobei die Sitze (501, 601, 602, 603, 706, 707) oder Sitzreihen (601, 602, 603, 607) durch Bewegen der Transportvorrichtung (702, 900) in definierbare Abstände bringbar sind.

4. System nach Anspruch 1 oder 2,
wobei das System zur Verschiebung der Sitze (501, 601, 602, 603, 706, 707) oder der Sitzreihen (601, 602, 603, 607) durch die Anwendung einer Schubkraft auf die einzelnen Sitze (501, 601, 602, 603, 706, 707) oder Sitzreihen (601, 602, 603, 607) ausgeführt ist.

5. System nach einem der vorhergehenden Ansprüche,
wobei das System zur autarken, einzelnen Verschiebung der ausgewählten Sitze (501, 601, 602, 603, 706, 707) oder Sitzreihen (601, 602, 603, 607) ausgeführt ist.

6. System nach einem der vorhergehenden Ansprüche, weiterhin aufweisend:
eine elektronische Steuerung zur Steuerung der Antriebseinrichtung.

7. System nach einem der vorhergehenden Ansprüche, weiterhin aufweisend:
eine oder mehrere separate Sitzschienen (502, 608) zum Führen der Sitze (501, 601, 602, 603, 706, 707); und
eine Verriegelungseinrichtung (503, 504) pro Sitz (501, 601, 602, 603, 706, 707) oder Sitzreihe (601, 602, 603, 607) zum Fixieren des Sitzes (501, 601, 602, 603, 706, 707) an der Sitzschiene (502, 608).

8. System nach Anspruch 7,
wobei die Verriegelungseinrichtung (503, 504) einen Stab (504) und ein Riegelelement (503) aufweist;
wobei der Stab (504) zur Betätigung des Riegelelements (503) vorgesehen ist und nach der Betätigung vom Riegelelement (503) lösbar ist.

9. System nach einem der vorhergehenden Ansprüche, weiterhin aufweisend:
eine Eingabeeinheit zur Änderung der Sitzkonfigurationsplanung durch einen Fluggast;
wobei die Eingabeeinheit außerhalb des Flugzeugs anordenbar ist und in diesem Fall drahtlos kommunizierfähig mit der Steuerung gekoppelt ist.

10. Sitzgruppe für ein Flugzeug, die Sitzgruppe aufweisend:
eine Vielzahl von Flugzeugsitzen; und
ein System zur gleichzeitigen longitudinalen Verschiebung der Sitze oder Sitzreihen nach einem der Ansprüche 1 bis 9.

11. Verwendung eines Systems nach einem der Ansprüche 1 bis 9 in einem Flugzeug.

12. Flugzeug mit einem System nach einem der Ansprüche 1 bis 9.

13. Verfahren zum gleichzeitigen longitudinalen Verschieben mehrerer ausgewählter Sitze oder Sitzreihen in einem Flugzeug, das Verfahren aufweisend die Schritte:
Planen einer Sitzplatzkonfiguration (122, 210, 302, 304, 401);
Voreinstellen von Abständen von Mitnehmern einer Antriebseinrichtung (208, 209);
Eingreifen der Mitnehmer in entsprechende Gegenstücke der Sitze oder Sitzreihen;
gleichzeitiges Verschieben der Sitze gemäß einer Änderung in der Sitzplatzkonfigurationsplanung (305, 403);
wobei durch die Einstellung der Abstände der Mitnehmer zueinander die späteren Sitzabstände bestimmt werden.

14. Verfahren nach Anspruch 13, weiterhin aufweisend die Schritte:
Übermittlung der geplanten Sitzplatzkonfiguration von einer Eingabeeinheit an eine Steuereinheit (401);
automatisches Lösen der Fixierung der Sitze vor der Verschiebung (402);
automatisches Fixieren der Sitze nach der Verschiebung (404).

15. Verfahren nach Anspruch 13 oder 14,
wobei die Eingabeeinheit außerhalb des Flugzeugs angeordnet ist.

## Claims

1. A system for simultaneous longitudinal shifting of several selected seats (501, 601, 602, 603, 706, 707) or seat rows (601, 602, 603, 607) in an aircraft, with the system comprising:
a drive device for shifting the seats (501, 601, 602, 603, 706, 707);
wherein the system is designed for shifting of the seats (501, 601, 602, 603, 706, 707) according to a change in seat configuration planning, **characterized in that**:
the drive device comprises a coding in the form of engaging portions (704, 705, 1201, 1202);
the seats (501, 601, 602, 603, 706, 707) or seat rows (601, 602, 603, 607) comprise corresponding counter portions;
the engaging portions (704, 705, 1201, 1202) are adapted for engaging the corresponding counter portions of the seats (501, 601, 602, 603, 706, 707) or seat rows (601, 602, 603, 607);
by adjusting the distances of the engaging portions (704, 705, 1201, 1202) with respect to each other the later seat pitches are determined.

2. The system of claim 1,
wherein the system is designed as a mechanically coupled system.

3. The system of claim 1 or 2,
wherein the system for shifting the seats (501, 601, 602, 603, 706, 707) or the seat rows (601, 602, 603, 607) is implemented by applying traction to the individual seats (501, 601, 602, 603, 706, 707) or seat rows (601, 602, 603, 607);
wherein the drive device is a transport device (702, 900) selected from the group consisting of a transport chain, a transport belt, a transport cable, a beaded cable and a toothed belt;
wherein the drive device furthermore comprises a motor or a mechanism for moving the transport device (702, 900);
wherein by moving the transport device (702, 900) the seats (501, 601, 602, 603, 706, 707) or seat rows (601, 602, 603, 607) can be brought to definable seat pitches.

4. The system of claim 1 or 2,
wherein the system is designed for shifting the seats (501, 601, 602, 603, 706, 707) or seat rows (601, 602, 603, 607) by means of the application of a thrust force to the individual seats (501, 601, 602, 603, 706, 707) or seat rows (601, 602, 603, 607).

5. The system of any one of the preceding claims,
wherein the system is designed for self-contained individual shifting of the selected seats (501, 601, 602, 603, 706, 707) or seat rows (601, 602, 603, 607).

6. The system of any one of the preceding claims, further comprising:
an electronic control device for controlling the drive device.

7. The system of any one of the preceding claims, further comprising:
one or several separate seat rails (502, 608) for guiding the seats (501, 601, 602, 603, 706, 707); and
a locking device (503, 504) for each seat (501, 601, 602, 603, 706, 707) or for each seat row (601, 602, 603, 607) for affixing the seat (501, 601, 602, 603, 706, 707) to the seat rail (502, 608).

8. The system of claim 7,
wherein the locking device (503, 504) comprises a bar (504) and a latching element (503);
wherein the bar (504) is provided for actuating the latching element (503), and after actuation can be detached from the latching element (503).

9. The system of any one of the preceding claims, further comprising:
an input unit for changing the seat configuration planning by a passenger;
wherein the input unit can be arranged outside the aircraft and in this case is coupled to the control device so that it can communicate wirelessly with the control device.

10. A seat arrangement for an aircraft, the seat arrangement comprising:
a multitude of aircraft seats; and
a system for simultaneous longitudinal shifting of the seats or seat rows of any one of claims 1 to 9.

11. The use of a system of any one of claims 1 to 9 in an aircraft.

12. An aircraft comprising a system of any one of claims 1 to 9.

13. A method for simultaneous longitudinal shifting of several selected seats or seat rows in an aircraft, with the method comprising the steps of:
planning a seat configuration (122, 210, 302, 304, 401);
pre-adjusting distances of engaging portions of a drive device (208, 209);
engaging of the engaging portions in corresponding counter portions of the seats or seat rows
simultaneously shifting the seats according to a change in the seat configuration planning (305, 403);
wherein by adjusting the distances of the engaging portions with respect to each other the later seat pitches are determined.

14. The method of claim 13, further comprising the steps of:
transferring the planned seat configuration from an input unit to a control unit (401);
automatically releasing the affixation of the seats prior to shifting (402);
automatically affixing the seats after shifting (404).

15. The method of claim 13 or 14,
wherein the input unit is arranged outside the aircraft.

## Revendications

1. Système destiné au déplacement longitudinal simultané de plusieurs sièges (501, 601, 602, 603, 706, 707) ou rangées de sièges (601, 602, 603, 607) sélectionnés dans un avion, le système comprenant :
un dispositif d'entraînement pour le déplacement des sièges (501, 601, 602, 603, 706, 707) ;
le système étant réalisé pour le déplacement des sièges (501, 601, 602, 603, 706, 707) suivant une modification dans un plan de configuration de places assises ;
**caractérisé en ce que**
le dispositif d'entraînement présente un codage en forme d'entraîneurs (704, 705, 1201, 1202) ;
les sièges (501, 601, 602, 603, 706, 707) ou rangées de sièges (601, 602, 603, 607) présentent des pendants correspondants ;
les entraîneurs (704, 705, 1201, 1202) sont réalisés pour la prise dans les pendants correspondants des sièges (501, 601, 602, 603, 706, 707) ou rangées de sièges (601, 602, 603, 607) ;
les écarts mutuels ultérieurs entre sièges sont définis par le réglage des écartements des entraîneurs (704, 705, 1201, 1202).

2. Système suivant la revendication 1, dans lequel le système est réalisé sous forme de système à accouplement mécanique.

3. Système suivant la revendication 1 ou 2, dans lequel le système est réalisé pour le déplacement des sièges (501, 601, 602, 603, 706, 707) ou des rangées de sièges (601, 602, 603, 607) par l'application d'une force de traction sur les sièges (501, 601, 602, 603, 706, 707) ou rangées de sièges (601, 602, 603, 607) individuels ;
Dans lequel le dispositif d'entraînement présente un dispositif de transport (702, 900) sélectionné parmi le groupe constitué d'une chaîne de transport, d'une bande transporteuse, d'un câble d'entraînement, d'un câble articulé et d'une courroie dentée ;
dans lequel le dispositif d'entraînement présente en outre un moteur ou une mécanique pour le déplacement du dispositif de transport (702, 900) ;
dans lequel les sièges (501, 601, 602, 603, 706, 707) ou rangées de sièges (601, 602, 603, 607) peuvent être amenés à des distances définissables par le déplacement du dispositif de transport (702, 900).

4. Système suivant la revendication 1 ou 2, dans lequel le système est réalisé pour le déplacement des sièges (501, 601, 602, 603, 706, 707) ou des rangées de sièges (601, 602 , 603 , 607) par l'application d'une force de cisaillement sur les sièges (501, 601, 602, 603, 706, 707) ou rangées de sièges (601, 602, 603, 607) individuels.

5. Système suivant l'une des revendications précédentes, dans lequel le système est réalisé pour le déplacement individuel, autarcique, des sièges (501, 601, 602, 603, 706, 707) ou rangées de sièges (601, 602, 603, 607) sélectionnés.

6. Système suivant l'une des revendications précédentes, comprenant en outre :
une commande électronique pour le contrôle du dispositif d'entraînement.

7. Système suivant l'une des revendications précédentes, comprenant en outre :
un ou plusieurs rails (502, 608) séparés pour le guidage des sièges (501, 601, 602, 603, 706, 707) ; et
un dispositif de verrouillage (503, 504) par siège (501, 601, 602, 603, 706, 707) ou rangée de sièges (601, 602, 603, 607) pour la fixation du siège (501, 601, 602, 603, 706, 707) sur son rail (502, 608).

8. Système suivant la revendication 7, dans lequel le dispositif de verrouillage (503, 504) présente une barre (504) et un élément de verrouillage (503) ;
la barre (504) est prévue pour l'actionnement de l'élément de verrouillage (503) et peut être débloquée, après l'actionnement, de l'élément de verrouillage (503).

9. Système suivant l'une des revendications précédentes, comprenant en outre :
une unité d'entrée pour la modification du plan de configuration des sièges par un passager ;
l'unité d'entrée pouvant être disposée à l'extérieur de l'avion et étant couplée dans ce cas sans fil en communication avec la commande.

10. Groupe de sièges pour un avion, le groupe de sièges comprenant :
une multiplicité de sièges d'avion ; et
un système destiné au déplacement longitudinal simultané des sièges ou rangées de sièges suivant l'une des revendications 1 à 9.

11. Utilisation d'un système suivant l'une des revendications 1 à 9 dans un avion.

12. Avion comprenant un système suivant l'une des revendications 1 à 9.

13. Procédé permettant le déplacement longitudinal simultané de plusieurs sièges ou rangées de sièges sélectionnés dans un avion, le procédé comprenant les étapes :
planification d'une configuration de places assises (122, 210, 302, 304, 401) ;
préréglage des écartements d'entraîneurs d'un dispositif d'entraînement (208, 209) ;
prise des entraîneurs dans des pendants correspondants de sièges ou rangées de sièges ;
déplacement simultané des sièges suivant une modification dans le plan de configuration des places assises (305 ; 403) ;
les écarts mutuels ultérieurs entre sièges étant définis par le réglage des écartements des entraîneurs.

14. Procédé suivant la revendication 13, comprenant en outre les étapes :
transmission de la configuration de places assises prévue d'une unité d'entrée à une unité de commande (401) ;
déblocage automatique de la fixation des sièges avant le déplacement (402) ;
fixation automatique des sièges après le déplacement (404).

15. Procédé suivant la revendication 13 ou 14, dans lequel l'unité d'entrée est disposée à l'extérieur de l'avion.
